Europäisches Patentamt

European Patent Office

Office européen des brevets

(19)

(11) Publication number: **0 059 836**
**B1**

(12) **EUROPEAN PATENT SPECIFICATION**

(45) Date of publication of patent specification: **21.08.85**

(51) Int. Cl.⁴: **G 02 B 27/14, G 01 J 3/42**

(21) Application number: **82100648.3**

(22) Date of filing: **29.01.82**

(54) **Optical beam splitter.**

(30) Priority: **06.03.81 US 241349**

(43) Date of publication of application:
**15.09.82 Bulletin 82/37**

(45) Publication of the grant of the patent:
**21.08.85 Bulletin 85/34**

(84) Designated Contracting States:
**CH DE GB LI**

(56) References cited:
**DE-U-6 912 584**
**FR-A- 483 761**
**FR-A-1 492 304**
**US-A-2 479 309**

(73) Proprietor: **THE PERKIN-ELMER CORPORATION**
**Main Avenue**
**Norwalk Connecticut 06856 (US)**

(72) Inventor: **Helms, Charles C.**
**128 Fresh Meadow Drive**
**Trumbull Connecticut 06611 (US)**
Inventor: **Atwood, John G.**
**149 Limekiln Road**
**Redding Connecticut 06896 (US)**

(74) Representative: **Patentanwälte Grünecker, Dr.**
**Kinkeldey, Dr. Stockmair, Dr. Schumann, Jakob,**
**Dr. Bezold, Meister, Hilgers, Dr. Meyer-Plath**
**Maximilianstrasse 58**
**D-8000 München 22 (DE)**

The file contains technical information
submitted after the application was filed and
not included in this specification

Courier Press, Leamington Spa, England.

EP 0 059 836 B1

## Description

The present invention relates to an achromatic beam splitter for using in a light beam, coming out of a monochromator exit slit of a double beam technique analytical instrument, comprising a first achromatic optical element in the path of a light beam from a light source, said element having a reflecting surface, with an aperture therethrough, whereby a first portion of said light beam is reflected by said reflecting surface and a second portion of said light beam passes through said aperture in said reflecting surface and with a second achromatic optical element, having a reflecting surface in the path of said second portion of said light beam, said reflecting surface being larger than said second portion of said light beam.

Such an achromatic beam splitter apparatus is known from FR—A—1 492 304. This optical beam splitter is used in a conventional analytical instrument using so-called double beam technique for analysing a sample material. In this technique, one beam is passed through a sample material under test and a second beam is passed through a reference material having known characteristics. Both beams are detected by known means and compared. By such a comparison, information about the sample material carried by the beam passed therethrough is easily discerned and evaluated. With this known device, the light beam, having a certain wavelength and coming out of a monochromator, is divided into a reference beam and a sample beam by an optical beam splitter. This known beam splitter uses a mirror plate, which has two apertures therethrough. This mirror plate is positioned such that the outcoming light beam exactly strikes on such plate over its whole length. Because it is known that the light coming out of a monochromator has a uniform energy distribution, the energy ratios between the light beam, reflected by said mirror and the light beam parts passing through said mirror are known.

However, if the divergency of the light beam changes, caused by thermal or mechanical instabilities of the optical elements, which have an influence on the light beam, it may happen that the ratio between the reflected beam and the beam passing through the mirror even changes, because if the light beam does not fill the entire mirror, the ratio passing through the mirror remains constant, however, the reflected part of the beam changes in ratio. Therefore, the relative ratio of the two beams even changes. This has a negative influence on the measurement and causes measurement errors.

It is, therefore, the object of the present invention to provide a beam splitter for using in an apparatus as stated above, which provides a stable ratio between the reference beam and the sample beam, even when the outcoming light beam of the monochromator is unstable within a certain degree.

According to the invention, this task is solved by an optical stop element, said element being positioned between the exit slit of the monochromator and said first achromatic optical element and having an aperture therethrough, said aperture being smaller than the cross-sectional area of the striking light beam, which, therefore, circumferentially overlaps said entire aperture and said first achromatic optical element being larger than said aperture of said stop element.

The optical stop element according to the invention allows only a part of the outcoming light beam to pass through it. Therefore, even when the divergency of the light beam changes, the cross-sectional area of the light beam, passing through said optical element, always remains constant. Consequently, the passing light beam can be divided into a reference and a sample beam having always the same ratio relationship, independent from variations of the beam divergency.

## Brief Description of the Drawing

The drawing, not drawn to scale, comprises:

Figure 1 which is an optical diagram of an apparatus embodying the principles of the present invention;

Figure 2 which is a pictorial representation of the beam splitter portion of the apparatus shown in Figure 1.

## Detailed Description of the Invention

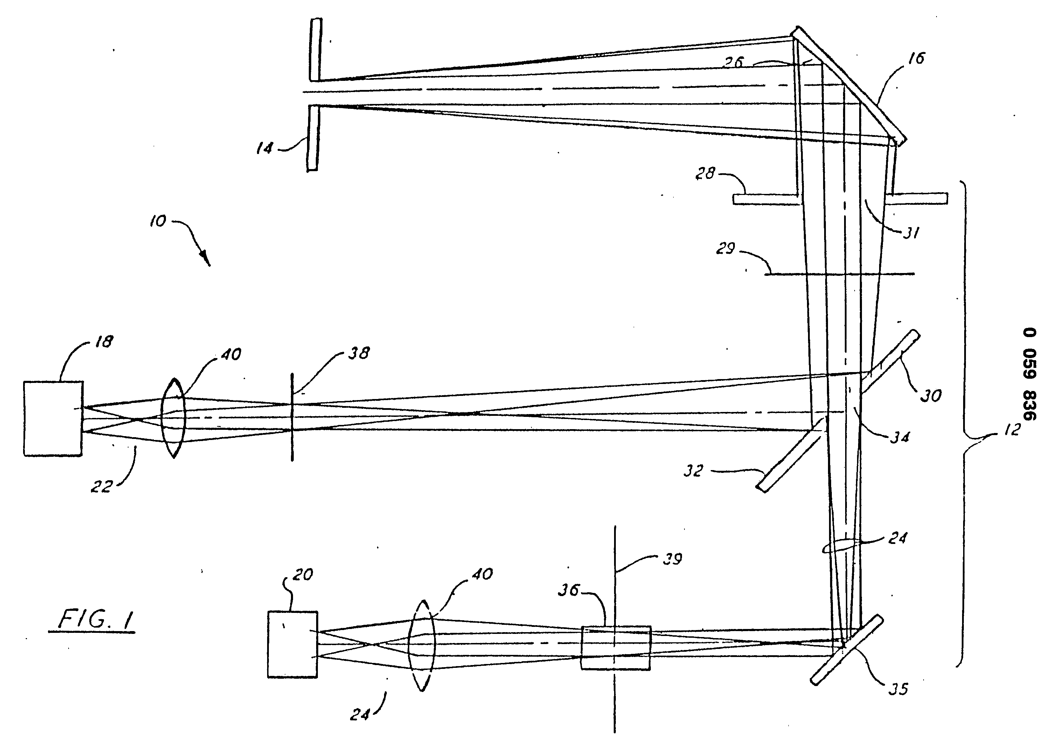

An optical apparatus, generally indicated at 10 in Figure 1, embodying the principles of the present invention, includes an achromatic beam splitter 12 which is mechanically and thermally stable. In addition, in this embodiment, the optical apparatus includes a first optical stop 14, a toroidal mirror 16 which directs light passing through the first stop 14 to the beam splitter 12. This embodiment further includes a reference detector 18 and a sample detector 20 positioned in the respective paths of the resultant reference beam 22 and sample beam 24 emanating from the beam splitter 12. As more fully described below, various elements are interposed between the beam splitter 12 and the detectors, 18 and 20, in the paths of the resultant beams, 22 and 24 respectively.

In one present embodiment, the first stop 14 is, in fact, the exit slit of a monochromator, not shown in the drawing. It will be recognized, nevertheless, that the light passing through the exit slit emanates from a diffraction grating with the monochromator. It is well known in the art that within conventional monochromators the light passing therethrough is, by the optical elements therein, focused in the plane of the diffraction grating. As a result, the plane of the diffraction grating is uniformly illuminated, i.e. the light intensity is the same, or uniform, in that plane. As more fully discussed below, resultant uniform illumination in the focus plane is an optical characteristic which is beneficially exploited by the present achromatic beam splitter 12 to enhance the mechanical and thermal stability thereof.

A toroidal mirror 16 is positioned in the path of the light beam passing through the first slit 14. Preferably, the mirror 16 is positioned such that the reflecting face 26 thereof is completely illuminated. The mirror 16 directs a substantial portion of the light beam emanating from the slit 14 to the achromatic beam splitter 12. In addition, the toroidal mirror 16 forms an image of the diffraction grating. The beam splitter 12 is positioned in the plane 29 of this grating image so formed. As such, the beam splitter 12 is uniformly illuminated.

The beam splitter 12 includes a first aperture 28 and two reflective optical elements 30 and 35. Element 30 separates the light beam passing through the first aperture 28 into a first resultant beam 22 and a second resultant beam 24 which strikes element 35 at the same angle of incidence. The first aperture 28 is overfilled, i.e. the cross-sectional area of the light beam reflected from the toroidal mirror 16 is greater than and circumferentially overlaps the entire aperture 28. Thus, even when subjected to conventional, or reasonable instabilities, the light beam striking the optical element 30 is of uniform illumination and of constant cross-sectional area, in spite of the fact that it may move with respect to element 30 in response to said instabilities. The instabilities referred to above include routine mechanical shocks as well as movement or dimensional changes due to temperature variations. For example, if the reflected beam from the toroidal mirror 16 has a diameter of about 10 millimeters and if the first aperture 28 has an opening 31 of about 7 millimeters and is centrally aligned therewith the overlap will not be exceeded by instabilities, i.e. the opening 31 will always be filled.

The achromatic optical element 30 is arranged so that all of the light passing through the first aperture 28 is projected on a first face 32 thereof with a margin to spare for relative motion of the beam with respect to element 30 and motion of element 30 with respect to the aperture 28. The optical element 30 includes a second aperture 34 therethrough the size of which is more fully discussed below, but which lies entirely within the area of illumination on the surface of element 30, with a margin to spare for relative motion of the element 30 with respect to element 28. The first face 32 is adapted to be substantially completely reflective, and by introducing another reflecting surface in the sample beam 24 the system is therefore achromatic, such a reflective face can be formed by known techniques, such as by providing a polished reflective coating, e.g. silver or aluminum, on the element 30. By this arrangement, a portion of the light projected onto the optical element 30 will pass through the second aperture 34 thereby forming the sample beam 24, which falls entirely within the reflective area of element 35 with a margin to spare for relative motion of the beam with respect to element 35.

The remainder of the light projected onto the element 30 is reflected by the first face 32 to form the reference beam 22.

The relative light energy between the two resultant light beams 22 and 24 is determined by the relative size of the second aperture 34 to the amount of light projected on the first face 32. If, as preferred, the first aperture 28 and the optical element 30 are positioned as close as feasible, then the light energy of the two resultant light beams, 22 and 24, is approximately equal to the ratio of the areas of the first and second apertures 28 and 34 respectively. Preferably, the areas of the apertures, 28 and 34, are adapted to provide a light energy ratio of one (1), i.e. the light energies in the resultant beams, 22 and 24, are equal.

A further important result of this configuration is that if the shape of the aperture 34 in element 30 is an ellipse such that the cross-section of the sample beam 24 in a plane normal to its direction of propagation is roughly circular, then the total etendue of the combined beam will have been divided into a sample and a reference beam such that the sample beam will pass axially through a sample cell having the least possible volume for a given path length.

In order to effect a practical embodiment of the achromatic beam splitter 12 it has been found that by placing the first aperture 28 and the optical element 30 in close proximity to each other beam spreading therebetween is substantially negligible. Further, by positioning the achromatic beam splitter 12 in the image plane 29 of the grating, the first aperture 28 and the optical element 30 are uniformly illuminated. In addition, it has been found that by axially aligning the center of the second aperture 34 with the first aperture 28 and by making the element 30 larger than the first aperture 28, the energy ratio of the resultant beams, 22 and 24, remains constant regardless of substantial instabilities.

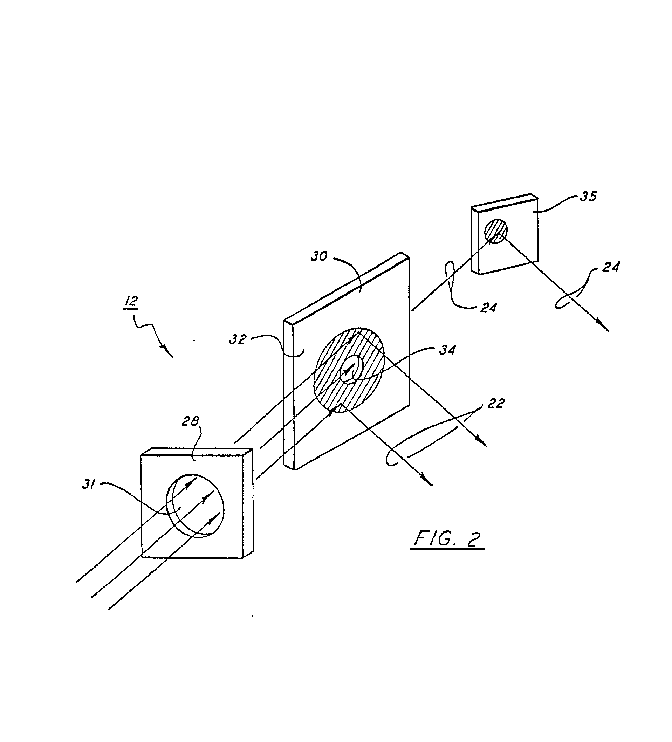

In one practical embodiment, shown in detail in Figure 2, the optical element 30 is in the shape of a rectangle having sides of about 3 cm by about 2 cm. The second aperture 34 is elliptical and has an average diameter of about 3.7 millimeters. The angle of incidence of the light beam on element 30 is 45°. The cross-section of sample beam 24 is circular and can pass through a cylindrical cell of minimum volume; e.g. about 9.2 microliters for a length of about 6 mm. The element 30 is spaced apart from the first aperture 28 by about 9.5 millimeters, as measured between the centers of the first and second apertures, 28 and 34. The resultant reference beam 22, the optical element 30 and the first aperture 28 are arranged to have an included angle of about 45 degrees therebetween. The actual physical mounting of the beam splitter 12 may be accomplished by known techniques, such as by rigidly bonding the aperture 28 and element 30 in their respective positions. Alternatively, the beam splitter 12 could also be mounted into rigidly affixed frames.

In the preferred embodiment, a mirror 35 is positioned in the path of the sample beam 24 at the same angle of incidence as an element 30. As a result, the number of optical reflections of the resultant beams 22 and 24 is equalized. Such an equalization further ensures that the apparatus 10 is achromatic.

As shown in Figure 1, the reference beam 22 and the sample beam 24 form images of the slit 14 in planes 38 and 39 respectively both an effective distance 'd' beyond element 30. To take maximum advantage of the uniform illumination, a sample cell 36 containing the sample material being analyzed is positioned so that the center thereof is located in the image planes 38 and 39. Subsequent to forming the image of the slit 14 in the image planes 38 the beams, 22 and 24, are focused, using known optical elements 40 such as lenses, on the reference detector 18 and sample detector 20. One technique of making absorption liquid chromatography measurements which is particularly benefitted by the apparatus 10 is described in an article entitled "New Techniques with UV detectors aid full HPLC use", by A.F. Poile, R.D. Conlon and L.S. Ettre published in Industrial Research & Development — February 1981, pp. 147-153.

Although the present invention has been described herein with reference to a particular embodiment, it will be understood that this description is exemplary in nature and is not considered as a limitation on the scope of the invention. The scope of the present invention is therefore only limited by the appended claims and the reasonable interpretation thereof.

**Claims**

1. An achromatic beam splitter apparatus for using in a light beam coming out of a monochromator exit slit of a double beam technique analytical instrument, comprising a first achromatic optical element (30) in the path of a light beam from a light source, said element (30) having a reflective surface (32), with an aperture (34) therethrough, whereby a first portion of said light beam (22) is reflected by said reflecting surface (32) and a second portion (24) of said light beam passes through said aperture (34) in said reflecting surface (32) and with a second achromatic optical element (35), having a reflecting surface in the path of said second portion (24) of said light beam, said reflecting surface being larger than said second portion (24) of said light beam, characterized in that an optical stop element (28) is provided, said element (28) being positioned between the exit slit of said monochromator and said first achromatic optical element (30) and having an aperture (31) therethrough said aperture (31) being smaller than the cross-sectional area of the striking light beam, which therefore circumferentially overlaps said entire aperture (31) and said first achromatic optical element (30) being larger than said aperture (31) of said stop element (28).

2. Apparatus as claimed in claim 1, characterized in that said aperture (34) of the first achromatic optical element (30) is dimensioned so, that the ratio of the area of light impinging on said first achromatic optical element (30) to the area of said aperture (34) in said reflecting surface (32) is equal to unity.

3. Apparatus as claimed in claims 1 or 2, characterized in that said aperture (34) of said first achromatic optical element (30) is elliptical and said first achromatic optical element (30) is positioned with respect to said stop element (28) such that said aperture (34) of said first achromatic optical element (30) is effectively circular whereby said second portion (24) of said light beam has a circular cross-section perpendicular to the direction of beam travel.

**Patentansprüche**

1. Achromatischer Strahlaufteiler zur Verwendung in einem Lichtstrahl, der aus einem Monochromatorausgangsspalt eines analytischen Gerätes, welches mit der Zweistrahltechnik arbeitet, austritt, mit einem ersten achromatischen optischen Element (30) im Lichtweg des von einer Lichtquelle abgegebenen Lichtstrahls, wobei dieses Element (30) eine reflektierende Fläche (32) und eine durch diese Oberfläche hindurchgehende Öffnung (34) aufweist, so daß ein erster Teillichtstrahl (22) von der reflektierenden Fläche (32) reflektiert wird und ein zweiter Teillichtstrahl (24) durch die Öffnung (34) in der reflektierenden Fläche (32) hindurchtritt und mit einem zweiten achromatischen optischen Element (35), welches im Lichtweg des zweiten Teillichtstrahls (24) eine reflektierende Fläche hat, die größer als der zweite Teillichtstrahl (24) ist, dadurch gekennzeichnet, daß eine optische Blende (28) vorgesehen ist, die zwischen dem Ausgangsspalt des Monochromators und dem ersten achromatischen optischen Element (30) angeordnet ist und eine Durchgangsöffnung (31) aufweist, deren Querschnittsfläche kleiner als die des auftreffenden Lichtstrahls ist, so daß dieser die gesamte Öffnung (31) mit seinem Umfang überlappt und daß das erste achromatische optische Element (30) größer als die Öffnung (31) der Blende (28) ist.

2. Gerät nach Anspruch 1, dadurch gekennzeichnet, daß die Öffnung (34) des ersten achromatischen optischen Elements (30) so bemessen ist, daß das Verhältnis der Flächen des Lichtes, welches auf das erste achromatische optische Element (30) trifft zu der Öffnungsfläche (34) in der reflektierenden Fläche (32) 1 beträgt.

3. Gerät nach Anspruch 1 oder 2, dadurch gekennzeichnet, daß die Öffnung (34) des ersten achromatischen optischen Elementes (30) elliptisch geformt ist und daß das erste achromatische optische Element (30) bezüglich der Blende (28) so angeordnet ist, daß die Öffnung (34) des ersten achromatischen optischen Elementes (30) wie eine runde Öffnung wirkt, wodurch der zweite Teillichtstrahl (24) im Querschnitt senkrecht zur Strahlausbreitungsrichtung rund ist.

## Revendications

1. Appareil achromatique diviseur de faisceau pour utilisation dans un faisceau lumineux sortant d'une fente de sortie de monochromateur d'un instrument analytique technique à double faisceau, comprenant un premier élément optique achromatique (30) dans le trajet d'un faisceau lumineux venant d'une source de lumière, cet élément (30) présentant une surface réfléchissante (32) à travers laquelle est formée une ouverture (34) de sorte qu'une première partie du faisceau lumineux (22) est réfléchie par cette surface réfléchissante (32) et qu'une deuxième partie (24) du faisceau lumineux passe à travers l'ouverture (34) de la surface réfléchissante (32) et un deuxième élément optique achromatique (35) présentant une surface réfléchissante dans le trajet de la deuxième partie (24) du faisceau lumineux, cette surface réfléchissante étant plus grande que la deuxième partie (24) du faisceau lumineux, caractérisé par le fait qu'un élément d'arrêt optique (28) est prévu, cet élément (28) étant placé entre la fente de sortie du monochromateur et le premier élément optique achromatique (30) et une ouverture (31) étant prévue au travers, cette ouverture (31) étant plus petite que l'aire de section du faisceau de lumière incidente qui chevauche donc circonférentiellement toute l'ouverture (31) et le premier élément optique achromatique (30) étant plus grand que l'ouverture (31) de l'élément d'arrêt optique (28).

2. Appareil selon la revendication 1, caractérisé par le fait que l'ouverture (34) du premier élément optique achromatique (30) est de dimension telle que le rapport de l'aire de lumière atteignant le premier élément optique achromatique (30) à l'aire de l'ouverture (34) de la surface réfléchissante (32) est égal à l'unité.

3. Appareil selon l'une quelconque des revendications 1 et 2, caractérisé par le fait que l'ouverture (34) du premier élément optique achromatique (30) est elliptique et que ce premier élément optique achromatique (30) est placé, relativement à l'élément d'arrêt (28), de telle sorte que l'ouverture (34) du premier élément optique achromatique (30) est effectivement circulaire, de sortie que la deuxième partie (24) du faisceau lumineux a une section circulaire perpendiculairement à la direction de propagation du faisceau.

_FIG. 1_

0 059 836

FIG. 2